# EUROPÄISCHE PATENTSCHRIFT

(11) **EP 3 372 371 B1**
(45) Veröffentlichungstag und Bekanntmachung des Hinweises auf die Patenterteilung: **13.11.2019**
(21) Anmeldenummer: 18160431.5
(22) Anmeldetag: 07.03.2018
(51) Int. Cl.: B29C 39/10, B29C 70/58, B29L 31/00, B29C 70/70, B29C 70/78

(54) **KUNSTSTOFFFORMTEIL UND VERFAHREN ZU DESSEN HERSTELLUNG**
PLASTIC MOULDED PART AND METHOD FOR ITS PRODUCTION
PIÈCE MOULÉE EN MATIÈRE PLASTIQUE ET SON PROCÉDÉ DE FABRICATION

(30) Priorität: 10.03.2017 DE 102017105144
(43) Veröffentlichungstag der Anmeldung: 12.09.2018
(73) Patentinhaber: BLANCO GmbH + Co KG, 75038 Oberderdingen (DE)
(72) Erfinder: Hajek, Andreas, 76356 Weingarten (DE)
(74) Vertreter: Hoeger, Stellrecht & Partner Patentanwälte mbB

(56) Entgegenhaltungen:
- WO-A1-2005/071000
- DE-A1- 3 602 356
- DE-A1-102004 055 365

## Beschreibung

Die vorliegende Erfindung betrifft ein Kunststoffformteil gemäss dem Oberbegriff des Anspruchs 1.

Die Erfindung betrifft ferner ein Verfahren zur Herstellung eines derartigen Kunststoffformteils.

Kunststoffformteile, die aus polymerisierbaren Gießmassen mit anorganischen Füllstoffen hergestellt werden, sind seit längerem bekannt, beispielsweise aus der WO 2005/071000 A1 oder der EP 0 753 017 B1. Der wichtigste Anwendungsbereich sind Küchenspülen, wobei ein Kunststoffformteil ein oder mehrere Becken umfassen kann, sowie ggf. eine Abtropffläche, die einstückig miteinander ausgebildet sind. Im Sanitärbereich können z.B. Waschbecken, Badewannen und Duschwannen als entsprechende Kunststoffformteile ausgebildet sein.

Durch den relativ hohen Füllstoffanteil der gattungsgemäßen Kunststoffformteile können die für einen Einsatz im Küchen- oder Sanitärbereich erforderlichen mechanischen Eigenschaften erreicht werden. Daneben kann durch die Auswahl des oder der Füllstoffe eine optische Strukturierung der Oberfläche der Kunststoffformteile erzielt werden, wie z.B. eine Granitdekoroberfläche.

Als nachteilig hat sich bei den bekannten Kunststoffformteilen die thermische Belastbarkeit erwiesen, insbesondere die Beständigkeit gegen Temperaturwechselbelastungen, die nicht zufriedenstellend ist. Solche Temperaturwechselbelastungen treten im praktischen Gebrauch insbesondere bei Küchenspülen in beträchtlichem Ausmaß auf, und zwar insbesondere an der Bodenfläche des Beckens, wenn heiße Kochtöpfe oder Pfannen im Becken abgestellt werden und anschließend kaltes Wasser eingelassen wird (oder umgekehrt). Es hat sich gezeigt, dass derartige Temperaturwechsel mit der Zeit zur Entstehung von feinen Rissen führen. Durch das Eindringen von Wasser und Fremdkörpern in die Risse kommt es dann zu einer weiteren Schädigung des Kunststoffformteils.

Zur Verbesserung der thermischen Beständigkeit von Küchenspülen wurde z.B. in der DE 10 2013 019 536 A1 vorgeschlagen, auf die der thermischen Belastung ausgesetzten Sichtseite des Kunststoffformkörpers ein mit einem ausgehärteten Bindemittel getränktes Fasergewebe, z.B. aus Kohlenstofffasern, aufzubringen. Hier hat sich jedoch gezeigt, dass es bei entsprechend hohen Temperaturwechselbelastungen zu einer Delamination des Fasergewebes kommen kann.

DE 36 02 356 A1 offenbart die Merkmale des Oberbegriffs des Anspruchs 1.

Der Erfindung liegt daher die Aufgabe zugrunde, ein Kunststoffformteil mit einer verbesserten Beständigkeit gegen Temperaturwechselbelastungen zur Verfügung zu stellen.

Diese Aufgabe wird bei dem Kunststoffformteil der eingangs genannten Art erfindungsgemäß durch Anspruch 1 gelöst.

Bei einem Kunststoffformteil mit mehreren Becken ist in der Bodenfläche mindestens eines der Becken das mindestens eine flächige metallische Verstärkungselement eingebettet. In der Praxis ist es normalerweise ausreichend, wenn nur das Hauptbecken (normalerweise das größte Becken) entsprechend verstärkt ist, weil dieses den stärksten Belastungen ausgesetzt ist.

Vorzugsweise ist das mindestens eine Verstärkungselement in der Nähe der Rückseite der Bodenfläche angeordnet, insbesondere innerhalb der rückseitigen Hälfte der Bodenfläche in Dickenrichtung, weiter bevorzugt innerhalb des rückseitugen Viertels. Überraschenderweise hat sich gezeigt, dass auf diese Weise die Rissbildung an der Sichtseite, die der unmittelbaren Temperaturwechselbelastung ausgesetzt ist, vermindert werden kann, obwohl das Verstärkungselement bei dieser Anordnung in der Regel mindestens 8 mm von der Sichtseite entfernt ist (bei einer typischen Dicke der Bodenfläche im Bereich von ca. 9 mm). Bei der bevorzugten Anordnung des Verstärkungselements im Bereich der Rückseite ist es unkritisch, wenn das Verstärkungselement herstellungsbedingt nicht vollständig von der Kunststoffmatrix überdeckt wird.

Das mindestens eine Verstärkungselement ist vorzugsweise ein Metallgewebe, -geflecht, -netz oder -gitter. Bei der Herstellung des Kunststoffformteils können solche Verstärkungselemente leicht an die Form und Größe der Bodenfläche angepasst werden. Insbesondere sind diese Materialien flexibel und können somit auch an eine gekrümmte Bodenfläche angepasst werden.

Das mindestens eine Verstärkungselement ist bevorzugt aus einem Metalldraht mit einem Durchmesser von 0,2 bis 0,7 mm gebildet, weiter bevorzugt von 0,5 bis 0,7 mm.

Das Metallgewebe, -geflecht, -netz oder -gitter weist bevorzugt eine Maschenweite von 1,75 bis 10 mm auf, weiter bevorzugt von 5 bis 10 mm. Die Maschenstruktur weist günstigerweise in zwei zueinander senkrechten Richtungen des flächigen Verstärkungselements dieselben Abmessungen auf.

Das mindestens eine Verstärkungselement sollte aus einem Metall gebildet sein, das eine ausreichende Festigkeit und Korrosionsbeständigkeit aufweist. Günstigerweise ist das mindestens eine Verstärkungselement aus Stahl gebildet, insbesondere aus Edelstahl oder verzinktem Stahl, aus Aluminium oder aus einer Aluminiumlegierung.

Das mindestens eine Verstärkungselement erstreckt sich über mindestens 90% der Bodenfläche der Beckenform (oder mindestens einer Beckenform) des Kunststoffformteils, um sicherzustellen, dass die Verbesserung der thermischen Beständigkeit zumindest in dem Bereich des Beckens erzielt wird, der in der Praxis hohen Belastungen ausgesetzt sein kann. Besonders bevorzugt erstreckt sich das mindestens eine Verstärkungselement im Wesentlichen über die gesamte Bodenfläche. Dabei kann ein einzelnes Verstärkungselement die entsprechende Fläche abdecken, oder mehrere Verstärkungselemente können jeweils benachbarte Bereiche der Fläche abdecken.

Für das Bindemittel wird Methylacrylat oder Methylmethacrylat, die nach der Aushärtung zu Formkörpern auf Acrylharzbasis führen, eingesetzt.

Zur Erhöhung der Viskosität der Gießmasse kann das Bindemittel einen Anteil an vorpolymerisiertem Polymethylacrylat (PMA) oder Polymethylmethacrylat (PMMA) umfassen.

Bei einer bevorzugten Ausführungsform der Erfindung, bei der das Bindemittel Methylacrylat oder Methylmethacrylat als Monomer umfasst, umfasst das Bindemittel eine weitere Komponente, die eine oder mehrere Verbindungen der Formel (I) enthält: 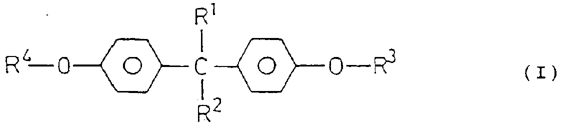 worin R¹ und R² gleich oder verschieden sind und ein Wasserstoffatom, eine C₁-C₆-Alkylgruppe, eine Arylgruppe oder gemeinsam eine Cycloalkylgruppe repräsentieren, wobei die C₁-C₆-Alkyl-, die Aryl- und die Cycloalkylgruppe ein- oder mehrfach mit einem Halogenatom, einer Cyanogruppe, einer Alkylgruppe, einer Hydroxylgruppe, einer Carbonylgruppe und/oder einer Carboxylgruppe substituiert sein kann;
worin R³ und R⁴ gleich oder verschieden sind und
a) eine ethylenisch ungesättigte Gruppe der Formel (II) repräsentieren:

   -R⁵-R⁶ (II)

   worin R⁵ eine Einfachbindung, eine Ethergruppe der Formel -(CR₂⁷)m-O-(worin R⁷ Wasserstoff oder Alkyl und m eine ganze Zahl von 1 bis 10 bedeutet) oder eine Polyethergruppe der Formel -(CH₂-CH₂-O)ₙ- oder -(CH₂-CH₂-CH₂-O)ₙ- repräsentiert, wobei n eine ganze Zahl von 1 bis 6 ist, und
   worin R⁶ eine mindestens einfach ungesättigte Alkenylgruppe mit 2 oder mehr C-Atomen, eine Acrylat- oder eine Methacrylatgruppe repräsentiert; und/oder
b) eine Gruppe der Formel (III) repräsentieren: 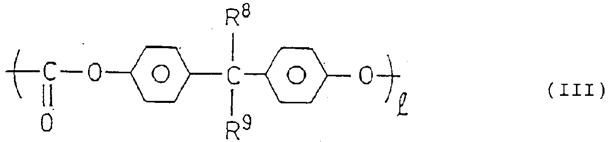 worin R⁸ und R⁹ wie R¹ und R², jedoch unabhängig davon definiert sind und l eine ganze Zahl von 1 bis 10 000 ist, wobei R⁸ und R⁹ bei l > 1 in der Formel (III) wechselnde Bedeutung haben können; und/oder
c) Wasserstoff repräsentieren, wobei höchstens einer der Reste R³ und R⁴ ein Wasserstoffatom ist.

Durch den Zusatz derartiger Verbindungen, die in der EP 0 753 017 B1 im Detail beschrieben sind, als weitere Komponente des Bindemittels kann generell die thermische Belastbarkeit der Kunststoffformteile, die in diesem Zusammenhang als Kochfestigkeit bezeichnet wird, verbessert werden.

Die weitere Komponente des Bindemittels ist bevorzugt ausgewählt aus diethoxyliertem Bisphenol-A-dimethacrylat, tetraethoxyliertem Bisphenol-A-dimethacrylat, einem Trimethylcyclohexyl-Bisphenol-Polycarbonat-Homopolymer, einem Bisphenol-A-Polycarbonat/Trimethylcyclohexyl-Bisphenol-Polycarbonat-Copolymer, und Mischungen hiervon.

Das Verhältnis des Gewichtsanteils an Methylacrylat oder Methylmethacrylat zu der Summe der Gewichtsanteile der weiteren Komponente und PMA oder PMMA beträgt vorzugsweise von 95:5 bis 40:60, weiter bevorzugt von 90:10 bis 50:50.

Als anorganische Füllstoffe können im Rahmen der Erfindung die aus dem Stand der Technik bekannten Materialien eingesetzt werden. Bevorzugt ist der mindestens eine anorganische Füllstoff ausgewählt aus Quarz, Cristobalit, Tridymit, Glas, Aluminiumtrihydroxid, Wollastonit oder Mischungen hiervon.

Bevorzugt umfasst die Gießmasse einen oder mehrere anorganische Füllstoffe als granulare Partikel mit einem mittleren Durchmesser von ca. 0,1 bis ca. 1 mm vor. Durch die Auswahl der Partikelgröße, insbesondere auch durch die Verwendung mehrerer Füllstofffraktionen mit unterschiedlichen Partikelgrößen, kann eine optisch ansprechende, strukturierte Oberfläche des Kunststoffformteils erhalten werden, insbesondere die bereits eingangs angesprochene Granitdekoroberfläche.

Zur Erzielung spezieller Effekte kann die Gießmasse auch einen oder mehrere anorganische Füllstoff als Partikel in Form von Fasern, Whiskern oder Nadeln umfassen.

Bei einer weiteren Ausführungsform der Erfindung umfasst die Gießmasse ferner ein mit einer ungesättigten Gruppe funktionalisiertes Organosiloxan. Durch den Zusatz derartiger Organosiloxane kann die schmutzabweisende Wirkung der Oberfläche der Kunststoffformteile erhöht werden. Hierdurch wird die Reinigung der entsprechenden Küchen- und Sanitärartikel erleichtert.

Alternativ oder zusätzlich kann die Gießmasse ferner ein partikelförmiges hydrophobes und/oder oleophobes Material umfassen. Beispiele für solche Materialien sind Polytetrafluorethylen, Fluorelastomere auf Basis von Vinylidenfluorid-Hexafluorpropylen-Copolymerisaten, Polypropylen oder Polypropylen-Comonomere, Silikonelastomere und hydrophobisierte Kieselsäure. Durch entsprechende Zusätze kann ebenfalls die Reinigungsfreundlichkeit der Kunststoffformteile verbessert werden, sowie zum Teil auch die Kratzfestigkeit, Schlagzähigkeit und Abriebsbeständigkeit.

Der Erfindung liegt ferner die Aufgabe zugrunde, ein Verfahren zur Herstellung eines Kunststoffformteils mit einer verbesserten Beständigkeit gegen Temperaturwechselbelastungen vorzuschlagen.

Diese Aufgabe wird gelöst durch ein Verfahren zur Herstellung eines erfindungsgemäßen Kunststoffformteils, umfassend die Schritte:
- Einlegen mindestens eines flächigen metallischen Verstärkungselements in ein Formwerkzeug;
- Einfüllen der Gießmasse in das Formwerkzeug; und
- Aushärten der Gießmasse.

Das mindestens eine Verstärkungselement wird vorzugsweise in einen Bereich des Formwerkzeugs eingelegt, der die Rückseite der Bodenfläche des herzustellenden Formteils definiert. Dies resultiert in einer Einbettung des mindestens einen Verstärkungselements in der Nähe der Rückseite der Bodenfläche, mit den oben beschriebenen Vorteilen.

Weitere Vorteile und bevorzugte Ausführungsformen des erfindungsgemäßen Verfahrens wurden bereits im Zusammenhang mit dem erfindungsgemäßen Kunststoffformteil erläutert.

Die nachfolgenden Beispiele dienen der näheren Erläuterung der Erfindung und ihrer Vorteile.

### Beispiele

### 1. Herstellung der Gießmasse

Es wird ein Bindemittel (Sirup) hergestellt aus 19,08 Gewichtsteilen Methylmethacrylat, 4,48 Gewichtsteilen PMMA des Typs Vedril 9K (Molekulargewichtsbereich von 50.000 bis 250.000), einem Gewichtsteil diethoxyliertem Bisphenol-A-Dimethacrylat (Diacryl 101 der Akzo Chemicals GmbH) und 0,44 Gewichtsteilen Trimethylolpropantrimethacrylat als Vernetzer. Die Gewichtsanteile beziehen sich auf die Gießmasse insgesamt, die durch Zugabe der folgenden Typen von granularem Quarzsand Granucol (Gebrüder Dorfner GmbH & Co.) zu dem Bindemittel erhalten wird:
1,41 Gewichtsteile Granucol braun 10/8 (mittlere Partikelgröße 570 µm)
6,97 Gewichtsteile Granucol erdbraun 4/8 (mittlere Partikelgröße 570 µm)
46,77 Gewichtsteile Granucol weiß 1/8 (mittlere Partikelgröße 570 µm)
19,85 Gewichtsteile Granucol weiß 2/9 (mittlere Partikelgröße 330 µm)

### 2. Herstellung von Kunststoffformteilen

Zur Herstellung von Kunststoffformteilen in Form einer Küchenspüle mit einer Beckenform wird die homogenisierte und evakuierte Gießmasse in ein entsprechendes Formwerkzeug gefüllt und dieses auf ca. 100 °C aufgeheizt. Nach ca. 20 min. ist die Gießmasse ausgehärtet und das Kunststoffformteil kann dem Formwerkzeug entnommen werden.

Zur Herstellung eines erfindungsgemäßen Beispiels eines Kunststoffformteils wird vor dem Einfüllen der Gießmasse ein Metallnetz aus verzinktem Stahl mit einem Drahtdurchmesser von 0,65 mm und einer Maschenweite von 6,3 x 6,3 mm so in das Formwerkzeug eingelegt, dass es in der Nähe der Rückseite der Bodenfläche der Küchenspüle eingebettet wird. Die Abmessungen dieses flächigen metallischen Verstärkungselements entsprechen in etwa den Abmessungen der Bodenfläche von 27 x 32 cm.

Als Vergleichsbeispiel 1 dient eine aus derselben Gießmasse hergestellte Küchenspüle ohne metallisches Verstärkungselement.

### 3. Weitere Vergleichsbeispiele

Als Vergleichsbeispiel 2 dient eine Küchenspüle, die gemäß der DE 10 2004 055 365 A1 hergestellt ist. Diese Küchenspüle wurde von der Fa. Schock GmbH bezogen, die solche Spülen unter der Bezeichnung CRISTADUR® vertreibt.

Als Vergleichsbeispiel 3 dient eine Küchenspüle gemäß der DE 10 2013 019 536 A1 mit einer Decklage auf der Sichtseite der Bodenfläche, die ein mit einem ausgehärtetem Bindemittel getränktes Fasergewebe aufweist. Diese Küchenspüle wurde von der Fa. Schock GmbH bezogen, die solche Spülen unter der Bezeichnung CARBON vertreibt.

### 4. Ermittlung der Temperaturwechselbeständigkeit

Die Ermittlung der Widerstandsfähigkeit der Kunststoffformteile gegen eine Temperaturwechselbelastung erfolgt gemäß der DIN EN 13310 Absatz 5.4, wobei für die vorliegenden Messungen die Einwirkzeit des heißen bzw. kalten Wassers gegenüber dem in der Norm angegebenen Wert von 90 Sekunden erhöht wurde.

Bei diesem Test werden die Kunststoffformteile bis zu 1.000 Heiß-Kalt-Zyklen mit Wasser ausgesetzt. Das Wasser besitzt während der Heißwasserphase eine Temperatur von 90 °C (±2 °C) und strömt für die angegebene Zeitdauer in das Becken der Spüle. Danach folgt eine Ruhezeit von 30 s (±1 s). Nach der Ruhezeit schließt sich die Kaltwasserphase bei einer Temperatur von 15 °C (±2 °C) für die angegebene Dauer an. Es folgt wiederum eine Ruhezeit von 30 s (± 1 s) bevor sich der Zyklus wiederholt. Der Wasserdurchfluss beträgt sowohl während der Heiß- als auch während der Kaltwasserphase jeweils 0,1 l/s (±0,01 l/s).

Der Test wird abgebrochen, wenn vor Erreichen von 1.000 Zyklen ein Materialversagen in Form von Rissbildungen an der Sichtseite der Bodenfläche des Spülbeckens auftritt.

In der nachfolgenden Tabelle 1 sind die Zeitdauern der Heißwasserphase und Kaltwasserphase sowie die erreichten Zyklenanzahlen für das erfindungsgemäße Kunststoffformteil und die drei Vergleichsbeispiele angegeben.

**Tabelle 1**

| | Heißwasserphase | Kaltwasserphase | erreichte Zyklenanzahl |
|---|---|---|---|
| Erfindungsgemäßes Beispiel | 270 ± 1 Sek. | 180 ± 1 Sek. | 1.000 |
| Vergleichsbeispiel 1 | 270 ± 1 Sek. | 180 ± 1 Sek. | 662 |
| Vergleichsbeispiel 2 | 180 ± 1 Sek. | 180 ± 1 Sek. | 621 |
| Vergleichsbeispiel 3 | 270 ± 1 Sek. | 180 ± 1 Sek. | 1.000 |

Aufgrund identischer Testbedingungen sind das erfindungsgemäße Beispiel und das Vergleichsbeispiel 1, die sich ausschließlich im Hinblick auf das flächige metallische Verstärkungselement unterscheiden, direkt vergleichbar. Es zeigt sich, dass das Verstärkungselement zu einer deutlichen Verbesserung der Temperaturwechselbeständigkeit führt. Bei der erfindungsgemäßen Spüle war auch nach 1.000 Zyklen noch keine Rissbildung festzustellen, während die Spüle ohne Verstärkungselement bereits nach 662 Zyklen versagte.

Die Temperaturwechselbeständigkeit des Vergleichsbeispiels 2 gemäß dem Stand der Technik ist als noch schlechter zu beurteilen, zumal die Rissbildung bereits nach 621 Zyklen auftrat, und dies bei einer kürzeren Einwirkzeit des heißen Wassers als beim Vergleichsbeispiel 1.

Das Vergleichsbeispiel 3 gemäß dem Stand der Technik zeigte zwar keine Rissbildung nach 1.000 Zyklen, jedoch eine deutliche Delamination zwischen der Kunststoffmatrix und dem Fasergewebe auf der Sichtseite der Bodenfläche.

## Patentansprüche

1. Kunststoffformteil mit einer Beckenform für den Küchen- oder Sanitärbereich, wobei das Formteil eine Bodenfläche mit einer dem Beckenvolumen zugewandten Sichtseite und einer gegenüber liegenden Rückseite aufweist, und wobei das Formteil durch Aushärten einer Gießmasse hergestellt ist, die ein Bindemittel mit einem polymerisierbares Monomer und einen anorganischen Füllstoff umfasst, wobei in der Bodenfläche mindestens ein flächiges metallisches Verstärkungselement eingebettet ist,
**dadurch gekennzeichnet, dass** die Gießmasse einen Anteil von 40 bis 85 Gew.% mindestens eines anorganischen Füllstoffs und ein Bindemittel mit Methylacrylat oder Methylmethacrylat als polymerisierbares Monomer umfasst.

2. Kunststoffformteil nach Anspruch 1, wobei das mindestens eine Verstärkungselement in der Nähe der Rückseite der Bodenfläche angeordnet ist, bevorzugt innerhalb der rückseitigen Hälfte der Bodenfläche in Dickenrichtung, weiter bevorzugt innerhalb des rückseitigen Viertels.

3. Kunststoffformteil nach Anspruch 1 oder 2, wobei das mindestens eine Verstärkungselement ein Metallgewebe, -geflecht, -netz oder -gitter ist.

4. Kunststoffformteil nach Anspruch 3, wobei das mindestens eine Verstärkungselement aus einem Metalldraht mit einem Durchmesser von 0,2 bis 0,7 mm gebildet ist, bevorzugt von 0,5 bis 0,7 mm.

5. Kunststoffformteil nach Anspruch 3 oder 4, wobei das Metallgewebe, -geflecht, -netz oder -gitter eine Maschenweite von 1,75 bis 10 mm aufweist, bevorzugt von 5 bis 10 mm.

6. Kunststoffformteil nach einem der vorhergehenden Ansprüche, wobei das mindestens eine Verstärkungselement aus Stahl gebildet ist, insbesondere aus Edelstahl oder verzinktem Stahl, aus Aluminium oder aus einer Aluminiumlegierung.

7. Kunststoffformteil nach einem der vorhergehenden Ansprüche, wobei sich das mindestens eine Verstärkungselement über mindestens 90% der Bodenfläche erstreckt, bevorzugt im Wesentlichen über die gesamte Bodenfläche.

8. Kunststoffformteil nach einem der vorhergehenden Ansprüche, wobei das Bindemittel einen Anteil an vorpolymerisiertem Polymethylacrylat (PMA) oder Polymethylmethacrylat (PMMA) umfasst.

9. Kunststoffformteil nach Anspruch 8, wobei das Bindemittel eine weitere Komponente umfasst, die eine oder mehrere Verbindungen der Formel (I) enthält: 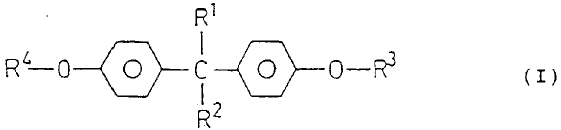
worin R¹ und R² gleich oder verschieden sind und ein Wasserstoffatom, eine C₁-C₆-Alkylgruppe, eine Arylgruppe oder gemeinsam eine Cycloalkylgruppe repräsentieren, wobei die C₁-C₆-Alkyl-, die Aryl- und die Cycloalkylgruppe ein- oder mehrfach mit einem Halogenatom, einer Cyanogruppe, einer Alkylgruppe, einer Hydroxylgruppe, einer Carbonylgruppe und/oder einer Carboxylgruppe substituiert sein kann;
worin R³ und R⁴ gleich oder verschieden sind und
a) eine ethylenisch ungesättigte Gruppe der Formel (II) repräsentieren:
-R⁵-R⁶ (II)
worin R⁵ eine Einfachbindung, eine Ethergruppe der Formel -(CR₂⁷)m-O- (worin R⁷ Wasserstoff oder Alkyl und m eine ganze Zahl von 1 bis 10 bedeutet) oder eine Polyethergruppe der Formel -(CH₂-CH₂-O)ₙ- oder -(CH₂-CH₂-CH₂-O)ₙ- repräsentiert, wobei n eine ganze Zahl von 1 bis 6 ist, und
worin R⁶ eine mindestens einfach ungesättigte Alkenylgruppe mit 2 oder mehr C-Atomen, eine Acrylat- oder eine Methacrylatgruppe repräsentiert; und/oder
b) eine Gruppe der Formel (III) repräsentieren: 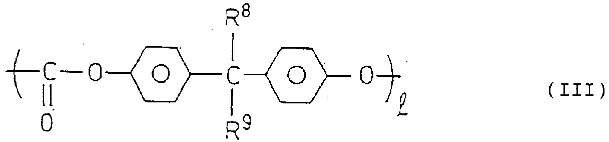 worin R⁸ und R⁹ wie R¹ und R², jedoch unabhängig davon definiert sind und l eine ganze Zahl von 1 bis 10 000 ist, wobei R⁸ und R⁹ bei l > 1 in der Formel (III) wechselnde Bedeutung haben können; und/oder
c) Wasserstoff repräsentieren, wobei höchstens einer der Reste R³ und R⁴ ein Wasserstoffatom ist.

10. Kunststoffformteil nach Anspruch 9, wobei die weitere Komponente ausgewählt ist aus diethoxyliertem Bisphenol-A-dimethacrylat, tetraethoxyliertem Bisphenol-A-dimethacrylat, einem Trimethylcyclohexyl-Bisphenol-Polycarbonat-Homopolymer, einem Bisphenol-A-Polycarbonat/Trimethylcyclohexyl-Bisphenol-Polycarbonat-Copolymer, und Mischungen hiervon.

11. Kunststoffformteil nach Anspruch 9 oder 10, wobei das Verhältnis des Gewichtsanteils an Methylacrylat oder Methylmethacrylat zu der Summe der Gewichtsanteile der weiteren Komponente und PMA oder PMMA von 95:5 bis 40:60 beträgt, bevorzugt von 90:10 bis 50:50.

12. Kunststoffformteil nach einem der vorhergehenden Ansprüche, wobei der mindestens eine anorganische Füllstoff ausgewählt ist aus Quarz, Cristobalit, Tridymit, Glas, Aluminiumtrihydroxid, Wollastonit oder Mischungen hiervon; und/oder wobei die Gießmasse einen oder mehrere anorganische Füllstoffe als granulare Partikel mit einem mittleren Durchmesser von 0,1 bis 1 mm umfasst.

13. Kunststoffformteil nach einem der Ansprüche, wobei die Gießmasse einen oder mehrere anorganische Füllstoffe als Partikel in Form von Fasern, Whiskern oder Nadeln umfasst; und/oder wobei die Gießmasse ferner ein mit einer ungesättigten Gruppe funktionalisiertes Organosiloxan umfasst; und/oder wobei die Gießmasse ferner ein partikelförmiges hydrophobes und/oder oleophobes Material umfasst.

14. Verfahren zur Herstellung eines Kunststoffformteils nach einem der vorhergehenden Ansprüche, umfassend die Schritte:
- Einlegen mindestens eines flächigen metallischen Verstärkungselements in ein Formwerkzeug;
- Einfüllen der Gießmasse in das Formwerkzeugs; und
- Aushärten der Gießmasse.

15. Verfahren nach Anspruch 14, wobei das mindestens eine Verstärkungselement in einen Bereich des Formwerkzeugs eingelegt wird, der die Rückseite der Bodenfläche des herzustellenden Formteils definiert.

## Claims

1. Plastics moulded part having a bowl shape for the kitchen or sanitary domain, wherein the moulded part has a bottom area with a visible side facing toward the bowl volume and a rear side lying opposite, and wherein the moulded part is produced by curing a casting material which comprises a binder with a polymerisable monomer and an inorganic filler, wherein at least one planar metallic reinforcing element is embedded in the bottom area,
**characterised in that** the casting material comprises a proportion of 40 to 85% by weight of at least one inorganic filler and a binder with methyl acrylate or methyl methacrylate as the polymerisable monomer.

2. Plastics moulded part according to claim 1, wherein the at least one reinforcing element is arranged in the proximity of the rear side of the bottom area, preferably within the rear-side half of the bottom area in the thickness direction, more preferably within the rear-side quarter.

3. Plastics moulded part according to claim 1 or 2, wherein the at least one reinforcing element is a metal weave, mesh, net or grid.

4. Plastics moulded part according to claim 3, wherein the at least one reinforcing element is formed from a metal wire with a diameter of 0.2 to 0.7 mm, preferably 0.5 to 0.7 mm.

5. Plastics moulded part according to claim 3 or 4, wherein the metal weave, mesh, net or grid has a mesh size of 1.75 to 10 mm, preferably 5 to 10 mm.

6. Plastics moulded part according to one of the preceding claims, wherein the at least one reinforcing element is formed of steel, in particular stainless steel or zinc-coated steel, of aluminium or an aluminium alloy.

7. Plastics moulded part according to one of the preceding claims, wherein the at least one reinforcing element extends over at least 90% of the bottom area, preferably substantially over the whole bottom area.

8. Plastics moulded part according to one of the preceding claims, wherein the binder comprises a proportion of pre-polymerised poly(methyl acrylate) (PMA) or poly(methyl methacrylate) (PMMA).

9. Plastics moulded part according to claim 8, wherein the binder comprises a further component which contains one or more compounds of the formula (I): 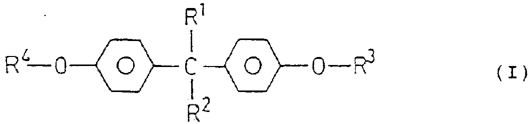
wherein R¹ and R² are the same or different and represent a hydrogen atom, a C₁-C₆ alkyl group, an aryl group or together a cycloalkyl group, wherein the C₁-C₆ alkyl group, the aryl group and the cycloalkyl group can be single or multiple substituted with a halogen atom, a cyano group, an alkyl group, a hydroxy group, a carbonyl group and/or a carboxyl group;
wherein R³ and R⁴ are the same or different and
a) represent an ethylenically unsaturated group of the formula (II):
-R⁵-R⁶ (II)
wherein R⁵ represents a single bond, an ether group of the formula-(CR₂⁷)ₘ-O- (wherein R⁷ represents hydrogen or alkyl and m represents a whole number from 1 to 10) or a polyether group of the formula -(CH₂-CH₂-O)ₙ- or -(CH₂-CH₂-CH₂-O)ₙ- wherein n is a whole number from 1 to 6, and
wherein R⁶ represents an at least single unsaturated alkenyl group with 2 or more C atoms, an acrylate or a methyacrylate group; and/or
b) represent a group of the formula (III): 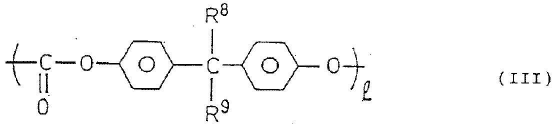 wherein R⁸ and R⁹ are defined like R¹ and R² but independently thereof and ℓ is a whole number from 1 to 10,000, wherein for ℓ > 1 in formula (III), R⁸ and R⁹ can have changeable meanings; and/or
c) represent hydrogen, wherein not more than one of the groups R³ and R⁴ is a hydrogen atom.

10. Plastics moulded part according to claim 9, wherein the further component is selected from diethoxylated bisphenol A dimethacrylate, tetraethoxylated bisphenol A dimethacrylate, a trimethylcyclohexylbisphenol-polycarbonate homopolymer, a bisphenol A polycarbonate/trimethylcyclohexyl-bisphenol-polycarbonate copolymer, and mixtures thereof.

11. Plastics moulded part according to claim 9 or 10, wherein the ratio of the proportion by weight of methyl acrylate or methyl methacrylate to the sum of the proportions by weight of the other components and PMA or PMMA is from 95:5 to 40:60, preferably from 90:10 to 50:50.

12. Plastics moulded part according to one of the preceding claims, wherein the at least one inorganic filler is selected from quartz, cristobalite, tridymite, glass, aluminium trihydroxide, wollastonite or mixtures thereof; and/or wherein the casting material comprises one or more inorganic fillers as granular particles with a mean diameter of 0.1 to 1 mm.

13. Plastics moulded part according to one of the preceding claims, wherein the casting material comprises one or more inorganic fillers as particles in the form of fibres, whiskers or needles; and/or wherein the casting material further comprises an organosiloxane functionalised with an unsaturated group; and/or wherein the casting material further comprises a particulate hydrophobic and/or oleophobic material.

14. Method for producing a plastics moulded part according to one of the preceding claims, comprising the steps:
- placing at least one planar metallic reinforcing element in a moulding tool;
- filling the moulding tool with the casting material; and
- curing the casting material.

15. Method according to claim 14, wherein the at least one reinforcing element is inserted in a region of the moulding tool which defines the rear side of the bottom area of the moulded part to be produced.

## Revendications

1. Pièce moulée en matière plastique avec une forme de cuvette pour la cuisine ou les salles d'eau, dans laquelle la pièce moulée présente une surface de fond avec un côté visible tourné vers le volume de cuvette et un côté arrière situé à l'opposé, et dans laquelle la pièce moulée est fabriquée par durcissement d'une matière à couler, qui comprend un liant avec un monomère polymérisable et une charge inorganique,
dans laquelle au moins un élément de renforcement métallique plat est intégré dans la surface de fond,
**caractérisée en ce que** la matière à couler comprend une fraction de 40 à 85 % en poids d'au moins une charge inorganique et un liant avec de l'acrylate de méthyle ou du méthacrylate de méthyle en tant que monomère polymérisable.

2. Pièce moulée en matière plastique selon la revendication 1, dans laquelle l'au moins un élément de renforcement est disposé à proximité du côté arrière de la surface de fond, de préférence à l'intérieur de la moitié côté arrière de la surface de fond dans le sens de l'épaisseur, de manière davantage préférée à l'intérieur du quart côté arrière.

3. Pièce moulée en matière plastique selon la revendication 1 ou 2, dans laquelle l'au moins un élément de renforcement est un tissu, un tressage, un filet ou une grille métallique.

4. Pièce moulée en matière plastique selon la revendication 3, dans laquelle l'au moins un élément de renforcement est formé à partir d'un fil métallique avec un diamètre de 0,2 à 0,7 mm, de préférence de 0,5 à 0,7 mm.

5. Pièce moulée en matière plastique selon la revendication 3 ou 4, dans laquelle le tissu, le tressage, le filet ou la grille métallique présente une ouverture de mailles de 1,75 à 10 mm, de préférence de 5 à 10 mm.

6. Pièce moulée en matière plastique selon l'une quelconque des revendications précédentes, dans laquelle l'au moins un élément de renforcement est formé à partir d'acier, en particulier d'acier inoxydable ou d'acier galvanisé, à partir d'aluminium ou à partir d'un alliage d'aluminium.

7. Pièce moulée en matière plastique selon l'une quelconque des revendications précédentes, dans laquelle l'au moins un élément de renforcement s'étend sur au moins 90 % de la surface de fond, de préférence sensiblement sur toute la surface de fond.

8. Pièce moulée en matière plastique selon l'une quelconque des revendications, dans laquelle le liant comprend une fraction de polyméthacrylate de méthyle (PMMA) ou de polyméthylacrylate (PMA) préalablement polymérisé.

9. Pièce moulée en matière plastique selon la revendication 8, dans laquelle le liant comprend un autre composant, qui contient un ou plusieurs composés de formule (I) : 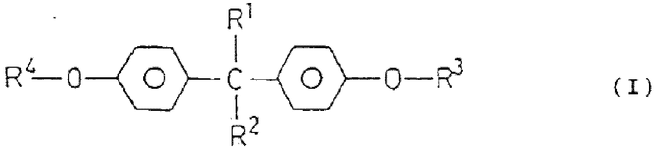 dans laquelle R¹ et R² sont identiques ou différents et représentent un atome d'hydrogène, un groupe C₁-C₆ alkyle, un groupe aryle ou conjointement un groupe cycloalkyle, dans laquelle les groupes C₁-C₆ alkyle, aryle et cycloalkyle peuvent être substitués une ou plusieurs fois par un atome d'halogène, un groupe cyano, un groupe alkyle, un groupe hydroxyle, un groupe carbonyle et/ou un groupe carboxyle ;
dans laquelle R³ et R⁴ sont identiques ou différents et
a) représentent un groupe insaturé éthyléniquement de formule (II) :
-R⁵-R⁶ (II)
dans laquelle R⁵ représente une liaison simple, un groupe éther de formule -(CR₂⁷)m-O- (dans laquelle R⁷ signifie de l'hydrogène ou un alkyle et m signifie un nombre entier de 1 à 10) ou un groupe polyéther de formule -(CH₂-CH₂-O)ₙ- ou -(CH₂-CH₂-CH₂-O)ₙ, dans laquelle n est un nombre entier de 1 à 6, et
dans laquelle R⁶ représente un groupe alcényle au moins monoinsaturé avec 2 atomes de C ou plus, un groupe acrylate ou méthacrylate ; et/ou
b) représentent un groupe de formule (III) : 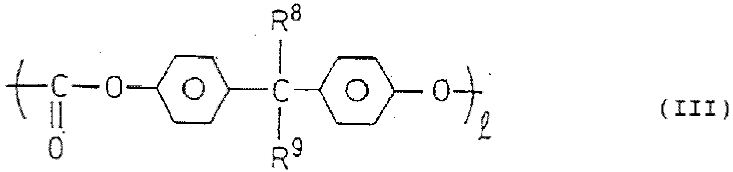 dans laquelle R⁸ et R⁹, comme R¹ et R², sont définis toutefois indépendamment les uns des autres et l est un nombre entier de 1 à 10 000, dans laquelle R⁸ et R⁹ peuvent avoir une signification fluctuante lorsque l > 1 dans la formule (III) ; et/ou
c) représentent de l'hydrogène, dans laquelle au maximum un des radicaux R³ et R⁴ est un atome d'hydrogène.

10. Pièce moulée en matière plastique selon la revendication 9, dans laquelle l'autre composant est choisi parmi le diméthacrylate-bisphénol A diéthoxylé, le diméthacrylate-bisphénol A tétraéthoxylé, un homopolymère polycarbonate-bisphénol-triméthylcyclohexyl, un copolymère polycarbonate-bisphénol-polycarbonate/triméthylcyclohexyl-bisphénol-A, et des mélanges de ceux-ci.

11. Pièce moulée en matière plastique selon la revendication 9 ou 10, dans laquelle le rapport entre la fraction en poids de méthylacrylate ou de méthylméthacrylate et la somme des fractions en poids de l'autre composant et de PMA ou de PMMA est de 95:5 à 40:60, de préférence de 90:10 à 50:50.

12. Pièce moulée en matière plastique selon l'une quelconque des revendications précédentes, dans laquelle l'au moins une charge inorganique est choisie parmi le quartz, la cristobalite, la tridymite, le verre, le trihydroxyde d'aluminium, la wollastonite ou des mélanges de ceux-ci ; et/ou dans laquelle la matière à couler comprend une ou plusieurs charges inorganiques en tant que particules granulaires avec un diamètre moyen de 0,1 à 1 mm.

13. Pièce moulée en matière plastique selon l'une quelconque des revendications précédentes, dans laquelle la matière à couler comprend une ou plusieurs charges en tant que particules sous la forme de fibres, de trichites ou d'aiguilles ; et/ou dans laquelle la matière à couler comprend en outre un organosiloxane fonctionnalisé avec un groupe non saturé ; et/ou dans laquelle la matière à couler comprend en outre un matériau sous forme particulaire hydrophobe et/ou oléophobe.

14. Procédé servant à fabriquer une pièce moulée en matière plastique selon l'une quelconque des revendications précédentes, comprenant les étapes :
- de placement d'au moins un élément de renforcement métallique plat dans un outil de moulage ;
- de transvasement de la matière à couler dans l'outil de moulage ; et
- de durcissement de la matière à couler.

15. Procédé selon la revendication 14, dans lequel l'au moins un élément de renforcement est placé dans une zone de l'outil de moulage, qui définit le côté arrière de la surface de fond de la pièce moulée à fabriquer.
